# EUROPEAN PATENT APPLICATION

(11) **EP 4 806 773 A1**
(43) Date of publication of application: **16.09.2026**
(21) Application number: 26159602.7
(22) Date of filing: 19.02.2026
(51) Int. Cl.: B62J 43/16, B62J 43/20

(54) **SUPPORT STRUCTURE FOR BATTERY**

(30) Priority: 13.03.2025 JP 2025039915
(71) Applicant: Suzuki Motor Corporation, Hamamatsu-shi, Shizuoka 432-8611 (JP)
(72) Inventor: KAMBAYASHI, Takahiro, Hamamatsu-shi (JP); TANAKA, Hiroshi, Hamamatsu-shi (JP)
(74) Representative: Haseltine Lake Kempner LLP

(57) **Abstract**

A support structure for a battery, the battery being fixed to a pair of lower frames spaced apart in a vehicle width direction of a saddle-type vehicle. The support structure includes a pair of fixing brackets provided on the pair of lower frames, a fixing portion of the battery, the fixing portion being fixed to the pair of fixing brackets, and a protrusion of the battery, the protrusion protruding outward in the vehicle width direction above the fixing portion. At least one of the pair of fixing brackets is formed with a support surface configured to temporarily support the protrusion from below.

## Description

### TECHNICAL FIELD

The present disclosure relates to a support structure for a battery.

### BACKGROUND ART

A saddle-type vehicle having a structure in which a battery for driving is supported on a vehicle body frame is known (see, for example, WO2014/102853A). In the support structure for the battery described in WO2014/102853A, a pair of main frames extend rearward from a head pipe of a vehicle body frame, and a pair of pivot frames extend downward from rear portions of the pair of main frames. In addition, a pair of down frames extend diagonally downward and rearward from the head pipe. A frame body is provided at a lower portion of a battery case, and the frame body of the battery case is fixed at both ends to the pair of down frames and the pair of pivot frames.

In the support structure for the battery described in WO2014/102853A, when the battery is installed or removed on or from the vehicle body frame, fixing points of the battery must be kept aligned with fixing points of the vehicle body frame. Since the battery is heavy, it places a great burden on a worker when installing or removing the battery.

### SUMMARY OF INVENTION

Aspect of non-limiting embodiments of the present disclosure relates to provide a support structure for a battery that allows a battery, which is a heavy object, to be easily installed or removed on or from a vehicle body frame.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a support structure for a battery, the battery being fixed to a pair of lower frames spaced apart in a vehicle width direction of a saddle-type vehicle, the support structure including:
a pair of fixing brackets provided on the pair of lower frames;
a fixing portion of the battery, the fixing portion being fixed to the pair of fixing brackets; and
a protrusion of the battery, the protrusion protruding outward in the vehicle width direction above the fixing portion,
in which at least one of the pair of fixing brackets is formed with a support surface configured to temporarily support the protrusion from below.

### BRIEF DESCRIPTION OF DRAWINGS

Exemplary embodiment(s) of the present invention will be described in detail based on the following figures, wherein:
FIG. 1 is a left side view of a saddle-type vehicle according to an example;
FIG. 2 is a left side view of a periphery of a battery according to the example;
FIG. 3 is a cross-sectional view of the periphery of the battery taken along a line III-III in FIG. 2;
FIG. 4A is a diagram illustrating an example of a battery fixing operation according to the example;
FIG. 4B is a diagram illustrating an example of the battery fixing operation according to the example;
FIG. 5A is a diagram illustrating an example of a battery removal operation according to the example; and
FIG. 5B is a diagram illustrating an example of the battery removal operation according to the example.

### DESCRIPTION OF EMBODIMENTS

A battery is fixed to a pair of lower frames of a saddle-type vehicle according to an aspect of the present disclosure. In this support structure for the battery, a pair of fixing brackets are provided on a pair of lower frames, and a fixing portion is provided on the battery, and the fixing portion is fixed to the pair of fixing brackets. In addition, a protrusion protrudes outward in a vehicle width direction from the battery, and the protrusion is positioned above the pair of fixing portions. At least one of the pair of fixing brackets is formed with a support surface that can temporarily support the protrusion from below. When the battery is installed or removed on or from the pair of fixing brackets, the protrusions of the battery are placed on the support surfaces of the fixing brackets, and the battery is temporarily supported by the fixing brackets. The protrusions of the battery are placed on the support surfaces of the fixing brackets, and then the fixing portion of the battery can be fixed to the pair of fixing brackets. Furthermore, the fixing portion of the battery can be removed from the pair of fixing brackets, and the battery can be lifted up after the protrusions of the battery are placed on the support surfaces of the fixing brackets. A worker does not need to continue holding the battery, which is a heavy object, and a workload on the worker when installing or removing the battery is reduced.

### Example

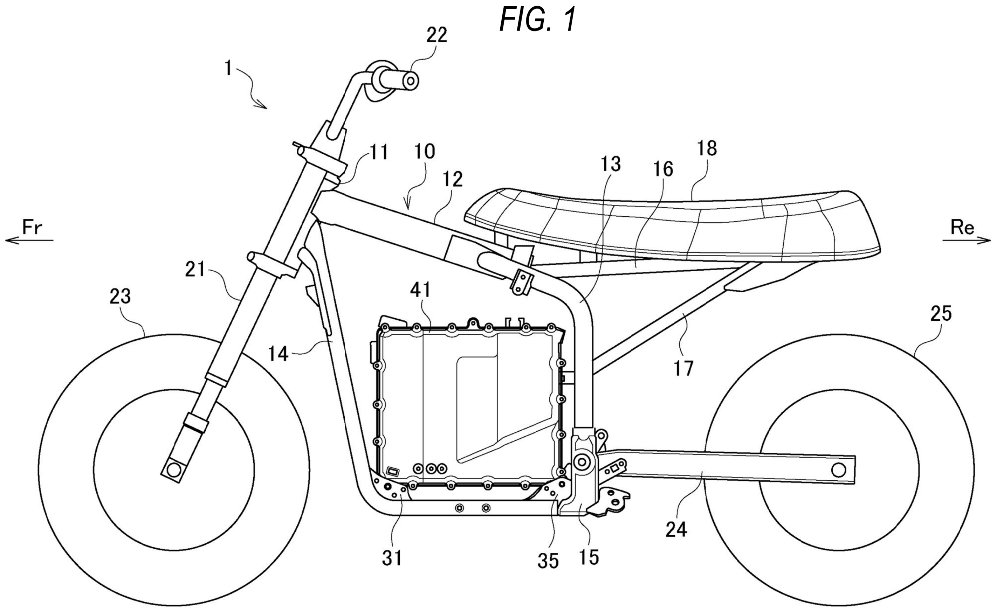

A saddle-type vehicle employing a support structure for a battery of this example will be described with reference to the accompanying drawings. FIG. 1 is a left side view of the saddle-type vehicle according to this example. In the following drawings, an arrow Fr indicates the front of the vehicle, an arrow Re indicates the rear of the vehicle, an arrow L indicates the left side of the vehicle, and an arrow R indicates the right side of the vehicle.

As illustrated in FIG. 1, a saddle-type vehicle 1 is configured by attaching various covers to a cradle-type vehicle body frame 10 as a vehicle body exterior. A main frame 12 extends rearward from a head pipe 11 of the vehicle body frame 10, and a pair of body frames 13 bent downward are connected to a rear portion of the main frame 12. A pair of down frames 14 extend downward from the head pipe 11, and the pair of down frames 14 are bent rearward after extending downward. A pair of pivot frames 15 are connected to lower portions of the pair of body frames 13, and rear portions of the pair of down frames 14 are connected to lower portions of the pair of pivot frames 15.

A pair of seat rails 16 extend rearward from the rear portion of the main frame 12, and a seat 18 is supported from below on the pair of seat rails 16. A pair of support frames 17 extend obliquely upward and rearward from the middle of the pair of body frames 13, and rear portions of the pair of support frames 17 are connected to rear portions of the pair of seat rails 16. A front fork 21 is supported on the head pipe 11 via a steering shaft (not illustrated) so as to be steerable. A handlebar 22 is provided on an upper portion of the front fork 21, and a front wheel 23 is rotatably supported on a lower portion of the front fork 21.

A swing arm 24 is supported by the pivot frame 15 so as to be able to swing. The swing arm 24 extends rearward from the pivot frame 15, and a rear wheel 25 is rotatably supported at a rear end of the swing arm 24. In addition, a pair of front fixing brackets (fixing brackets) 31 are provided at front bending points of the pair of down frames 14, and a pair of rear fixing brackets (other fixing brackets) 35 are provided at the rear portions of the pair of down frames 14 and the pair of pivot frames 15. A battery 41 having a large dimension is fixed to the pair of front fixing brackets 31 and the pair of rear fixing brackets 35.

In a typical saddle-type vehicle, when a battery is fixed to a frame, the battery, which is a heavy object, must be lifted up and precise alignment must be performed between the battery and the frame. Furthermore, when the battery needs to be moved a long distance when being carried inside the frame, a worker must hold the battery for a long time. Furthermore, there is a risk that the battery may fall down when the battery is removed. Therefore, in this example, a pair of protrusions protrude outward in a vehicle width direction from left and right side surfaces of the battery, and the pair of protrusions are formed so as to be temporarily supported from below by fixing brackets.

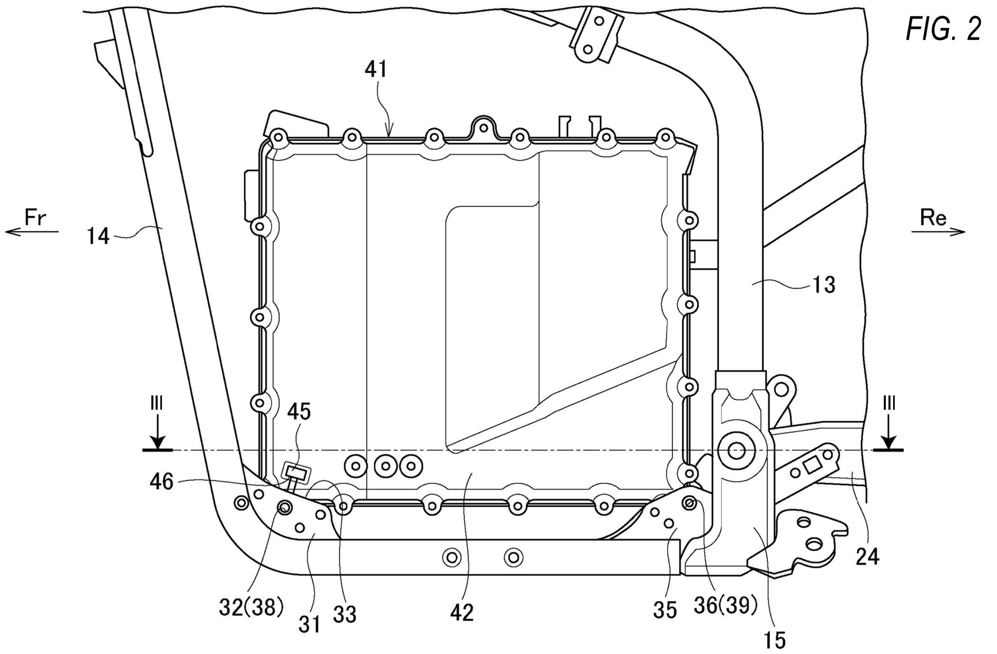

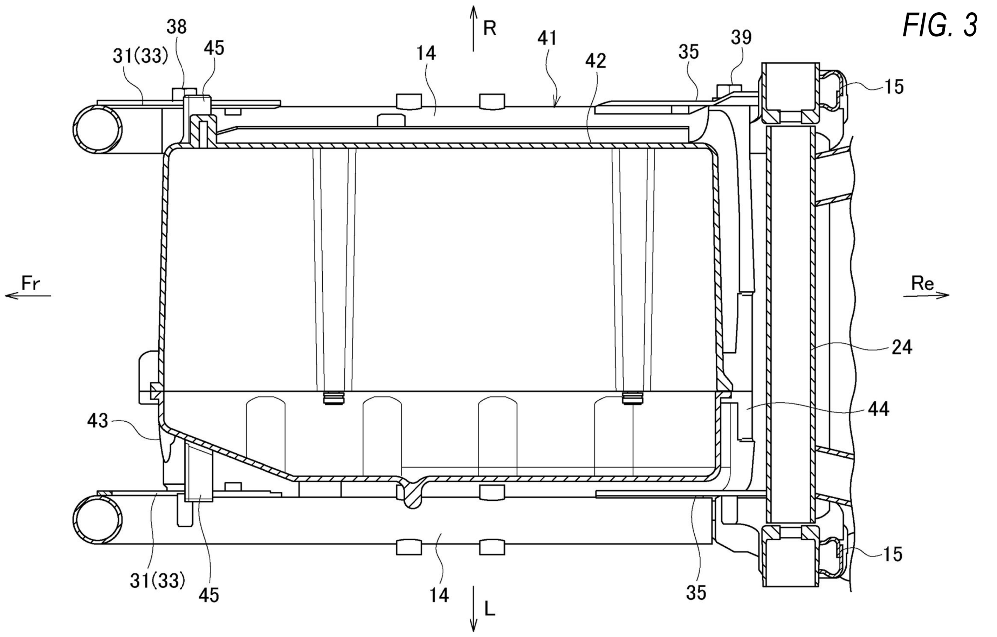

A support structure for a battery will be described with reference to FIGs. 2 and 3. FIG. 2 is a left side view of a periphery of the battery according to this example. FIG. 3 is a cross-sectional view of the periphery of the battery taken along a line III-III in FIG. 2.

As illustrated in FIGs. 2 and 3, the pair of down frames (lower frames) 14 are spaced apart in the vehicle width direction, and the pair of front fixing brackets 31 having a metal plate shape are provided at front bent portions of the pair of down frames 14. The pair of front fixing brackets 31 protrude upward from the pair of down frames 14, and upper end surfaces of the pair of front fixing brackets 31 are formed with support surfaces 33 that can temporarily support protrusions 45 described below from below. The support surfaces 33 of the pair of front fixing brackets 31 are inclined so as to become lower toward the rear. A pair of front fixing holes (fixing holes) 32 into which a front fastening bolt 38 is inserted are formed in plate surfaces of the pair of front fixing brackets 31.

The pair of rear fixing brackets 35 having a metal plate shape are provided at the rear portions of the pair of down frames 14 and at the lower portions of the pair of pivot frames 15. The pair of rear fixing brackets 35 protrude upward from the pair of down frames 14 and protrude forward from the pair of pivot frames 15. Rear fixing holes 36 into which a rear fastening bolt 39 is inserted are formed in plate surfaces of the pair of rear fixing brackets 35. A pair of the rear fixing holes 36 are positioned at approximately the same height as the pair of front fixing holes 32, and the pair of front fixing holes 32 and the pair of rear fixing holes 36 support the battery 41 in an approximately horizontal position.

A case 42 of the battery 41 is formed in a generally rectangular shape when viewed from the side, and a plurality of cells (single cells) are accommodated inside the case 42. A front fixing portion 43 having a cylindrical shape and a rear fixing portion 44 having a cylindrical shape are provided on lower front and lower rear sides of the case 42. Both ends of the front fixing portion 43 and the rear fixing portion 44 in the vehicle width direction protrude from the case 42 in the shape of a boss. Boss-shaped portions of the front fixing portion 43 and the rear fixing portion 44 are aligned with the pair of front fixing holes 32 and the pair of rear fixing holes 36 inside the pair of front fixing brackets 31 and the pair of rear fixing brackets 35, and are fixed with the front fastening bolt 38 and the rear fastening bolt 39.

A pair of protrusions 45 protrude outward in the vehicle width direction from a front side of the case 42 of the battery 41. The pair of protrusions 45 are located above the front fixing portion 43. The pair of protrusions 45 are formed in a rectangular shape when viewed from the side, and lower surfaces of the pair of protrusions 45 are inclined so as to become lower toward the rear. The lower surfaces of the pair of protrusions 45 form abutment surfaces 46 facing the support surfaces 33 of the pair of front fixing brackets 31, and the battery 41 is temporarily supported by placing the abutment surfaces 46 of the pair of protrusions 45 on the support surfaces 33 of the pair of front fixing brackets 31. Furthermore, when the battery 41 is fixed, the abutment surfaces 46 of the pair of protrusions 45 are parallel to the support surfaces 33 of the pair of front fixing brackets 31.

In this battery 41, the support surfaces 33 of the pair of front fixing brackets 31 are utilized to improve the ease of installation and removal of the battery 41. When fixing the battery 41, the pair of protrusions 45 of the battery 41 are placed on the support surfaces 33 of the pair of front fixing brackets 31, and then the battery 41 is fixed to the pair of front fixing brackets 31 and the pair of rear fixing brackets 35. When removing the battery 41, the battery 41 is removed from the pair of front fixing brackets 31 and the pair of rear fixing brackets 35, and the pair of protrusions 45 of the battery 41 are placed on the support surfaces 33 of the pair of front fixing brackets 31, and then the battery 41 is lifted up.

As described above, the pair of protrusions 45 protrude from the case 42 of the battery 41, and the pair of front fixing brackets 31 are located below the pair of protrusions 45. A distance between tips of the pair of protrusions 45 is greater than a distance between the pair of front fixing brackets 31 facing each other. Therefore, even when the battery 41 is released from the hand while being installed or removed, the pair of protrusions 45 of the battery 41 will abut against the support surfaces 33 of the pair of front fixing brackets 31, preventing the battery 41 from falling. A load is received by upper ends of the pair of front fixing brackets 31, and the front fixing brackets 31 are thick in a load direction, making the front fixing brackets 31 less likely to deform.

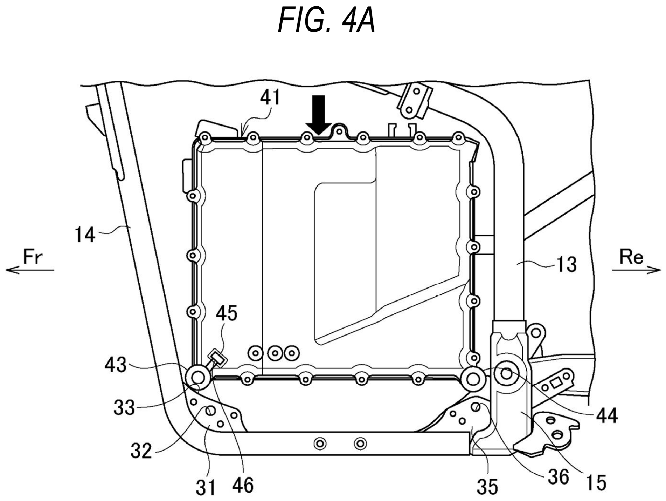

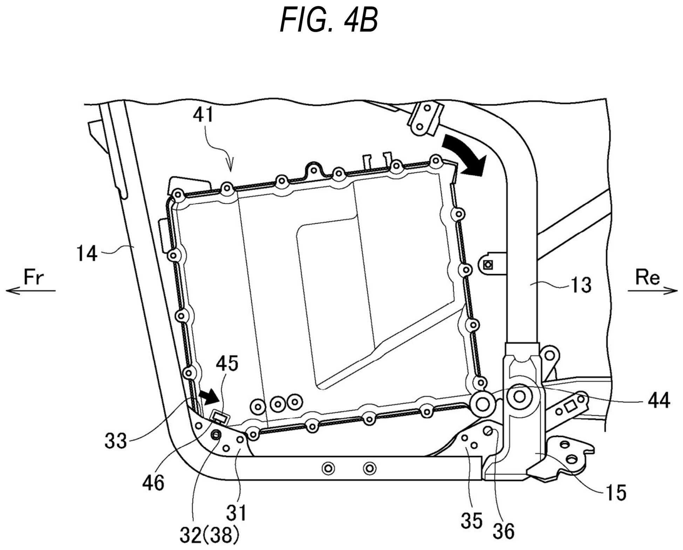

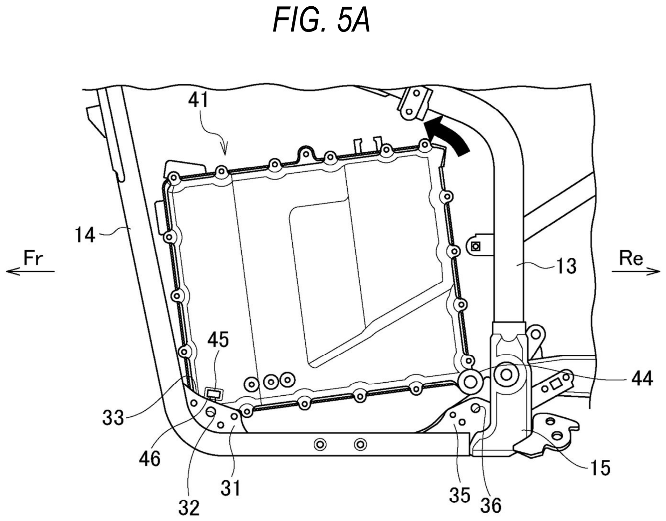

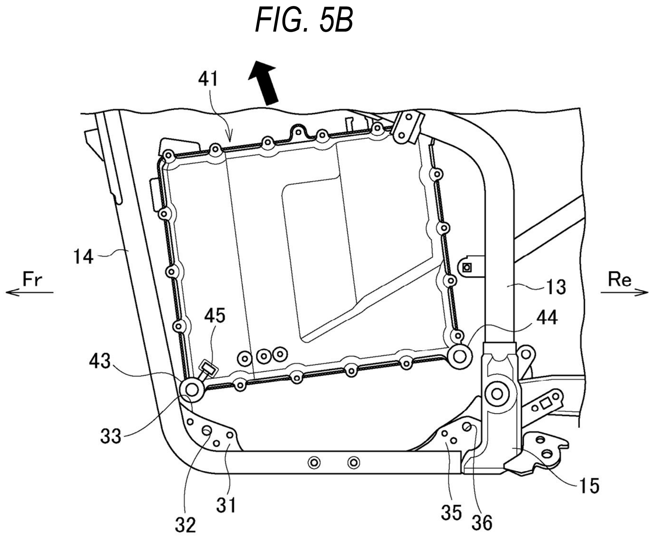

Battery installation and removal operations will be described with reference to FIGs. 4A, 4B, 5A, and 5B. FIGs. 4A and 4B are diagrams illustrating an example of the battery fixing operation of this example. FIGs. 5A and 5B are diagrams illustrating an example of the battery removal operation of this example.

As illustrated in FIG. 4A, when fixing the battery 41, the pair of protrusions 45 are placed on the support surfaces 33 of the pair of front fixing brackets 31, and the battery 41 is lowered in a substantially horizontal position. The abutment surfaces 46 of the pair of protrusions 45 and the support surfaces 33 of the pair of front fixing brackets 31 are inclined downward toward the rear, and the abutment surfaces 46 of the pair of protrusions 45 and the pair of front fixing brackets 31 are parallel to each other. Even when the abutment surfaces 46 of the pair of protrusions 45 abut against the support surfaces 33 of the pair of front fixing brackets 31, the pressure is dispersed by the surface contact between the abutment surfaces 46 and the support surfaces 33, thereby suppressing deformation of the pair of front fixing brackets 31.

As illustrated in FIG. 4B, when the pair of protrusions 45 are placed on the support surfaces 33 of the pair of front fixing brackets 31, the front fixing portion 43 and the rear fixing portion 44 of the battery 41 are aligned with the pair of front fixing brackets 31 and the pair of rear fixing brackets 35. Since the support surfaces of the pair of front fixing brackets 31 are inclined downward toward the rear, when the pair of protrusions 45 are placed on the pair of support surfaces 33, the battery 41 is moved rearward by utilizing its own weight. This allows the front fixing portion 43 and the rear fixing portion 44 of the battery 41 to be easily aligned with the pair of front fixing brackets 31 and the pair of rear fixing brackets 35.

In this case, the front fixing holes 32 are formed directly below the support surfaces 33 of the pair of front fixing brackets 31. By placing the pair of protrusions 45 on the support surfaces 33 of the pair of front fixing brackets 31, the front fixing portion 43 of the battery 41 can be easily aligned with the front fixing holes 32 of the pair of front fixing brackets 31. Then, the front fastening bolt 38 is inserted into the front fixing holes 32 of the pair of front fixing brackets 31 and the front fixing portion 43 of the battery 41. In addition, the inclination of the battery 41 is adjusted using the front fastening bolt 38 as a fulcrum, and the rear fastening bolt 39 (see FIG. 3) is inserted into the rear fixing holes 36 of the pair of rear fixing brackets 35 and the rear fixing portion 44 of the battery 41.

As illustrated in FIG. 5A, when removing the battery 41, the rear fastening bolt 39 is pulled out from the rear fixing holes 36 of the pair of rear fixing brackets 35 and the rear fixing portion 44 of the battery 41. In addition, the battery 41 is tilted so that the pair of protrusions 45 are placed on the support surfaces 33 of the pair of front fixing brackets 31, and the front fastening bolt 38 is pulled out from the front fixing holes 32 of the pair of front fixing brackets 31 and the front fixing portion 43 of the battery 41. Even when the front fastening bolt 38 and the rear fastening bolt 39 are removed from the battery 41, the pair of protrusions 45 are supported by the support surfaces 33 of the pair of front fixing brackets 31, so that the battery 41 will not fall.

As illustrated in FIG. 5B, the battery 41 is lifted up from a state in which the pair of protrusions 45 are supported by the support surfaces 33 of the pair of front fixing brackets 31. Since the battery 41 is supported by the support surfaces 33 of the pair of front fixing brackets 31, an initial load when lifting the battery 41 is reduced. The battery 41 will not fall off the vehicle body frame 10, making it easier to ensure the safety of the worker. Since a lifting operation begins with the battery 41 supported on the support surfaces 33 of the pair of front fixing brackets 31, the burden on the worker is reduced and workability is improved.

As described above, according to the support structure for the battery 41 of this example, when the battery 41 is installed or removed on or from the pair of front fixing brackets 31, the pair of protrusions 45 of the battery 41 are placed on the support surfaces 33 of the pair of front fixing brackets 31, and the battery 41 is temporarily supported by the pair of front fixing brackets 31. After the pair of protrusions 45 are placed on the support surfaces 33 of the pair of front fixing brackets 31, the battery 41 can be fixed to the pair of front fixing brackets 31 and the pair of rear fixing brackets 35. In addition, the battery 41 can be removed from the pair of front fixing brackets 31 and the pair of rear fixing brackets 35, and the pair of protrusions 45 can be placed on the support surfaces 33 of the pair of front fixing brackets 31, and then the battery 41 can be lifted up. The worker does not need to continue to hold the battery 41, which is a heavy object, and a workload on the worker when installing or removing the battery 41 is reduced.

In this example, the pair of protrusions protrude outward in the vehicle width direction from the battery, but it is sufficient that at least one protrusion protrudes outward in the vehicle width direction from the battery. In this case, a support surface is formed on one of the front fixing brackets in correspondence with the protrusion of the battery.

In addition, in this example, the support surfaces are formed on the pair of front fixing brackets, but support surfaces may also be formed on a pair of rear fixing brackets, or support surfaces may be formed on both a pair of front fixing brackets and a pair of rear fixing brackets. In this case, the battery is provided with a protrusion at a position corresponding to the support surface.

Furthermore, in this example, the pair of down frames are exemplified as a pair of lower frames, but the pair of lower frames may be any frames that can support the battery from below.

In addition, in this example, the support surfaces of the pair of front fixing brackets are inclined so as to become lower toward the rear, but the support surfaces of the pair of front fixing brackets may also be formed horizontally.

In addition, in this embodiment, the abutment surfaces of the pair of protrusions and the support surfaces of the pair of front fixing brackets are parallel, but the abutment surfaces of the pair of protrusions and the support surfaces of the pair of front fixing brackets may be non-parallel. In addition, the abutment surface of the protrusion and the support surface of the front fixing bracket being parallel means that the abutment surface of the protrusion and the support surface of the front fixing bracket are approximately parallel to the extent that the abutment surface of the protrusion can be considered to be along the support surface of the front fixing bracket.

Furthermore, the support structure for the battery of this example is not limited to being adopted in the saddle-type vehicle described above, and may be adopted in other types of saddle-type vehicles. The term "saddle-type vehicle" is not limited to all vehicles in which a driver rides while straddling a seat, but also includes scooter-type vehicles in which a driver rides without straddling a seat.

As described above, a first aspect is a support structure for a battery (41) fixed to a pair of lower frames (down frames 14) spaced apart in a vehicle width direction of a saddle-type vehicle (1), the structure including a pair of fixing brackets (front fixing brackets 31) provided on the pair of lower frames, a fixing portion (front fixing portion 43) of the battery fixed to the pair of fixing brackets, and a protrusion (45) of the battery protruding outward in the vehicle width direction above the fixing portion, where at least one of the pair of fixing brackets is formed with a support surface (33) that can temporarily support the protrusion from below. According to this configuration, when the battery is installed or removed on or from the pair of fixing brackets, the protrusions of the battery are placed on the support surfaces of the fixing brackets, and the battery is temporarily supported by the fixing brackets. The battery can be fixed to the pair of fixing brackets after the protrusions of the battery are placed on the support surfaces of the fixing brackets. Also, the battery can be removed from the pair of fixing brackets, and the protrusions of the battery can be placed on the support surfaces of the fixing brackets, and then the battery can be lifted up. A worker does not need to continue holding the battery, which is a heavy object, and a workload on the worker when installing or removing the battery is reduced.

In a second aspect, in the first aspect, the pair of fixing brackets are formed with fixing holes (front fixing holes 32) directly below the support surfaces to which the fixing portion is fixed. According to this configuration, the protrusions of the battery are placed on the support surfaces of the fixing brackets, and the fixing portion of the battery are easily aligned with the fixing holes of the pair of fixing brackets.

In a third aspect, in the first or second aspect, the protrusions are a pair of protrusions that protrude outward in the vehicle width direction above the fixing portion, and the pair of fixing brackets are formed with a pair of the support surfaces that can temporarily support the pair of protrusions from below. According to this configuration, even when the battery is released from the hand while being installed or removed, the pair of protrusions of the battery will abut against the support surfaces of the pair of fixing brackets, preventing the battery from falling.

In a fourth aspect, in any one of the first to third aspects, the support structure for the battery further includes a pair of other fixing brackets (rear fixing brackets 35) provided on the pair of lower frames, where a front side of the battery is fixed to the pair of fixing brackets, and a rear side of the battery is fixed to the pair of other fixing brackets, and the support surface is inclined so as to become lower toward the rear. According to this configuration, the support surface of the fixing bracket is inclined downward toward the rear, so that the battery can be moved rearward by placing the protrusion of the battery on the support surface and utilizing the weight of the battery itself. This makes it easier to align the battery with respect to the pair of fixing brackets and the pair of other fixing brackets.

In a fifth aspect, in any one of the first to fourth aspects, the protrusion has an abutment surface (46) facing the support surface, the abutment surface being parallel to the support surface. According to this configuration, even when the abutment surface of the protrusion abuts against the support surface of the fixing bracket, the pressure is dispersed by the surface contact between the abutment surface and the support surface, thereby suppressing deformation of the fixing bracket.

Although the present example is described, other examples may be made by combining the above-described example and modification examples in whole or in part.

Furthermore, the technology of the present invention is not limited to the above-described example, and may be variously changed, substituted, or modified within the scope that does not deviate from the spirit and intent of the technical idea. Furthermore, when the technical idea can be realized in a different way due to technological advances or derived other technologies, it may be implemented using that method. Therefore, the claims cover all embodiments that may fall within the scope of the technical concept.

## Claims

1. A support structure for a battery, the battery being fixed to a pair of lower frames spaced apart in a vehicle width direction of a saddle-type vehicle, the support structure comprising:
a pair of fixing brackets provided on the pair of lower frames;
a fixing portion of the battery, the fixing portion being fixed to the pair of fixing brackets; and
a protrusion of the battery, the protrusion protruding outward in the vehicle width direction above the fixing portion,
wherein at least one of the pair of fixing brackets is formed with a support surface configured to temporarily support the protrusion from below.

2. The support structure for the battery according to claim 1, wherein the pair of fixing brackets are formed with fixing holes, to which the fixing portion is fixed, directly below the support surfaces.

3. The support structure for the battery according to claim 1 or 2,
wherein the protrusions are a pair of protrusions that protrude outward in the vehicle width direction above the fixing portion, and
the pair of fixing brackets are formed with a pair of the support surfaces configured to temporarily support the pair of protrusions from below.

4. The support structure for the battery according to claim 1 or 2, further comprising:
a pair of other fixing brackets provided on the pair of lower frames,
wherein a front side of the battery is fixed to the pair of fixing brackets, and a rear side of the battery is fixed to the pair of other fixing brackets, and
the support surface is inclined so as to become lower toward the rear.

5. The support structure for the battery according to claim 4, wherein the protrusion has an abutment surface facing the support surface, the abutment surface being parallel to the support surface.
